# EUROPEAN PATENT APPLICATION

(11) **EP 4 718 900 A1**
(43) Date of publication of application: **01.04.2026**
(21) Application number: 24203159.9
(22) Date of filing: 27.09.2024
(51) Int. Cl.: H04W 12/041, H04W 12/30

(54) **SCP SESSION KEY DIVERSIFICATION**

(71) Applicant: Giesecke+Devrient Mobile Security Germany GmbH, 81677 München (DE)
(72) Inventor: Monter Prat, Jordi, Dulles,, VA 20166 (US)
(74) Representative: Giesecke+Devrient IP

(57) **Abstract**

A method in a processing entity, for calculating, in a Security Domain, SD, included in said processing entity, related to an SCPllc Secure Channel between an Off-Card Entity, OCE, and a Security Domain, SD, SCPllc session keys, the calculating made based on:
a) an SD static public key PK.SD.ECKA;
b) an OCE static secret key SK.OCE.ECKA;
c) an OCE ephemeral secret key eSK.OCE.ECKA; and
d) key diversification data;

the key diversification data being used to effect that more than one SCPllc session keys calculated with the same keys a), b) and c) are different from each other;
**characterized in that**
the SCPllc session keys are calculated for different Card Group IDs and/or different Hosts, in that the key diversification data comprise the following SCPllc parameters:
- HostID (Tag 84); and
- Card Group ID (e.g. Subject Identifier (Tag 5F20) from CERT.SD.ECKA certificate).

## Description

### Field of the invention

The invention relates to diversification of Secure Channel Protocol, SCP, session keys, particularly of SCP11c session keys.

### Background of the invention and prior art

When connecting devices over mobile networks to other entities, for example to other devices or to servers in the network background system, subscriber identity modules, SIMs, hosted in the devices are employed for authentication purposes.

Secure Elements SE are small-footprint computing entities, having limited computing and storage capacities, and having an IC chip with an operating system, OS, and application content depending on the application area of the Secure Element.

A SIM is a Secure Element having as application area securing connecting devices over mobile networks. A SIM comprises, in addition to an IC chip with an operating system, OS, at least one subscriber profile, or briefly profile. The profile is a set of profile data enabling operation of the mobile device in a mobile network of a mobile network operator, sometimes only briefly referred to as Operator, owning the profile. The SIM comprises several Security Domains, SD. Particularly, each profile comprises, in the SIM, an Issuer Security Domain Profile, ISD-P, holding the profile data. As a central security domain, the SIM comprises the Issuer Security Domain Root, ISD-R.

SIMs are known in different form factors including plug-in SIM, pSIM, also referred to as SIM card, designed to be removably plugged into a device, embedded SIM, eSIM, designed to be soldered into a device, and integrated SIM, iSIM, designed as integrated into the chipset of the device. For SIM, also the terminology Secure Element is used, and correspondingly pSE, eSE, iSE for pSIM, eSIM, iSIM.

SIMs of form factor embedded, eSIM, and integrated, iSIM, are as a rule (Remote-)SIM-Provisioning, RSP, capable. For example, [1] [SGP.22] GSMA SGP.22 RSP Technical Specification Version 3.0, 19th October 2022, describes Remote SIM Provisioning of SIMs in Consumer devices. [2] [SGP.32] GSMA SGP.32 eSIM IoT Technical Specification Version 1.0.1, 04 July 2023 describes Remote SIM Provisioning of SIMs in loT devices. In [1] SGP22 and [2] SGP.32, the SIM is referenced as eUICC (embedded universal integrated circuit card), however the principles of [1], [2] are applicable to RSP capable SIMs of different form factors including embedded and integrated.

Yet-unpublished technical document SGP.42 describes IFPP, In-Factory Profile Provisioning, which is SIM provisioning to SEs, especially SIMs/eUICCs, in an In-Factory environment in which the SE/SIM/eUICC is offline, i.e. disconnected, from remote servers like SM-DP+ or SM-DPf. Herein, the Off-Card entity OCE communicating with the SE is a production machine in the In-Factory environment. The production machine has, on the other hand, capability to run an online communication connection with a profile server SM-DPf outside the In-Factory environment, for receiving profiles, which are to be provisioned to SE/SIM/eUICC inside the In-Factory environment later.

For some tasks in (Remote) SIM Provisioning, a Secure Channel, SC, according to a Secure Channel Protocol, SCP, pursuant to Global Platform between a remote entity and a security domain, SD, in the SIM, is established, for example SCP02, SCP03 or SCP11.

Document [3] GPC_2.3_F_SCP11_v1.4, Global Platform Technology Secure Channel Protocol '11' Card Specification v2.3 - Amendment F Version 1.4 of March 2024, specifies a secure channel protocol, named Secure Channel Protocol '11' (SCP11), based on Elliptic Curve Cryptography (ECC) for mutual authentication and secure channel initiation and on Advanced Encryption Standard, AES, for secure messaging, between a remote entity, referred to as Off-Card-Entity "OCE", and a "card", which is sometimes represented by a Security Domain SD in the "card". In document [3], the entity "card" is sometimes referenced directly only as "SD", and authentication (or any other procedure) between Off-card Entity and "card" is referenced as authentication (or any other procedure) between OCE and SD.

Three variants of the protocol SCP11 according to [3] are defined:
- SCP11a provides mutual authentication between the Off-Card Entity (OCE) and the card, using two pairs of static keys and two pairs of ephemeral keys, as described in NIST 800-56A as "(Cofactor) Full Unified Model C(2e, 2s, ECC CDH)" for curves with a cofactor of 1.
- SCP11b provides authentication of the card to the OCE only. Authentication of the OCE to the card must be provided by other means. An example is provided in Annex A of [3]. Herein, two ephemeral key pairs and one static key pair are used. The Off-Card Entity OCE does not have a static key pair, and the ephemeral key pair of the OCE is used twice.
- SCP11c provides mutual authentication between the OCE and the card, using only static keys for the authentication of the card. This allows for offline scripting usage, authorized by the CERT.OCE.ECKA, as described in Annex B of [3]. Herein, two static key pairs and one ephemeral key pair are used. The Security Domain SD (of the card) does not create an ephemeral key pair, and the static key pair of the Security Domain SD is used twice. This scheme SCP11c is described in NIST 00-56A as "One-Pass Unified Model C(1e, 2s, ECC CDH) Scheme.

The basic principle underlying the Secure Channel Protocols SCP implies the derivation of session keys from static keys or/and ephemeral keys.

As described above, SCP11c (a.k.a DSEM, Decentralized Secure Element Management) uses only static keys in the involved security domain SD to calculate the session keys, therefore same session keys can be calculated across configurations that share the same SD key configuration. SCP11c allows to build offline scripts, as the authentication and the session keys can be pre-calculated in advance just knowing the public key of the SD static key (security domain's static key). In that sense SCP11c does not provide Forward Secrecy as only one ephemeral key is used during the authentication which it is the OCE ephemeral key. In any case, session keys calculated during SCP11c authentication produced for a particular configuration that shares same static key in the SD will be the same and the authentication will be accepted by any SD with the same configuration (as long as the same [3] certificate CA-KLOC public key is configured). The here-described feature has advantages, on the other hand is a challenge when differing session keys are needed.

In detail, more than one different session key may need to be derived from one and the same static key or/and ephemeral key. In such a case, the static key or/and ephemeral key is combined with key diversification data in order to enable derivation of different session keys from an identical static key or/and ephemeral key.

The procedure of deriving different SCP session keys based on diversification data is also referred to as diversification of SCP session keys.

### Objective of the invention

It is an object of the present invention to provide a flexible solution for diversification of SCP11c session keys. Especially, a solution for session key generation suitable for being employed in combination with an offline script shall be provided.

### Summary of the invention

The object of the invention is achieved by a method with following features, according to claim 1. Embodiments of the invention are presented in dependent claims.

In greater detail, the object of the invention is achieved by a method, in a processing entity, or in an Off-Card entity, for calculating SCP11c session keys, related to an SCP11c Secure Channel between an Off-Card Entity, OCE, and a Security Domain, SD. The calculation is made either in a Security Domain, SD, included in said processing entity, or in said OCE, in two matching procedures using public and private keys as follows, such that the calculation in the processing entity and in the OCE produce the same session keys.

The calculating of the SCP11c session keys at the Off-Card entity, OCE, is made based on:
a) an SD static public key PK.SD.ECKA;
b) an OCE static secret key SK.OCE.ECKA;
c) an OCE ephemeral secret key eSK.OCE.ECKA; and
d) key diversification data;
the key diversification data being used to effect that more than one SCP11c session keys calculated with the same keys a), b) and c) are different from each other.

The calculating of the SCP11c session keys at the processing entity Security Domain, SD, is made based on:
a) an SD static secret key SK.SD.ECKA;
b) an OCE static public key PK.OCE.ECKA;
c) an OCE ephemeral public key ePK.OCE.ECKA; and
d) key diversification data;
the key diversification data being used to effect that more than one SCP11c session keys calculated with the same keys a), b) and c) are different from each other.

The calculating method, at each of the Off-Card entity, OCE, and the processing entity, is characterized in that the SCP11c session keys are calculated for different Card Group IDs and/or different Hosts, in that the key diversification data comprise the following SCP11c parameters:
- HostID (Tag 84); and
- Card Group ID.

The purpose of the here presented solution is to describe a method to diversify SCP11c keys. The focus of the presented method, when applied to [3], is in other words the variant SCP11c of [3].

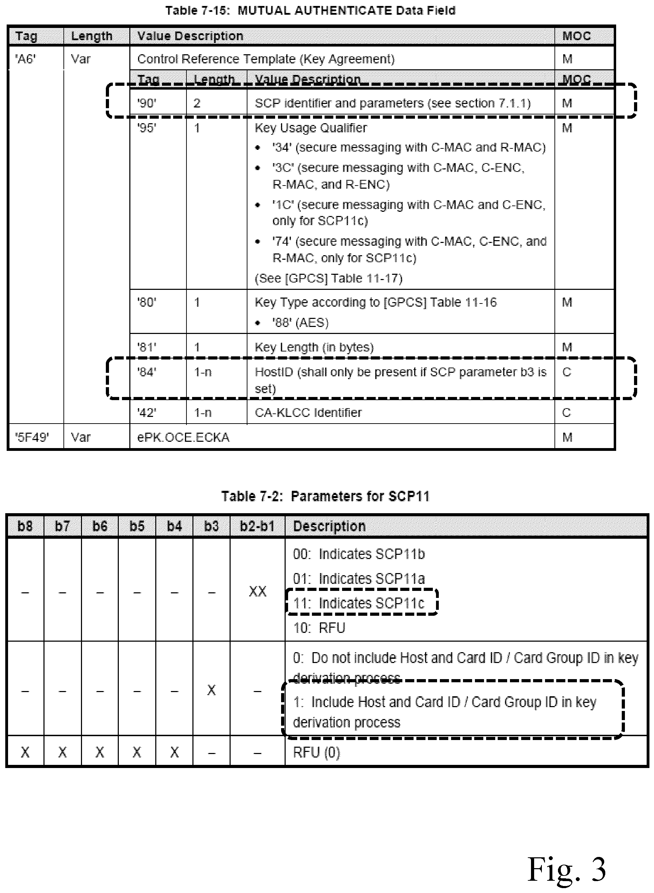

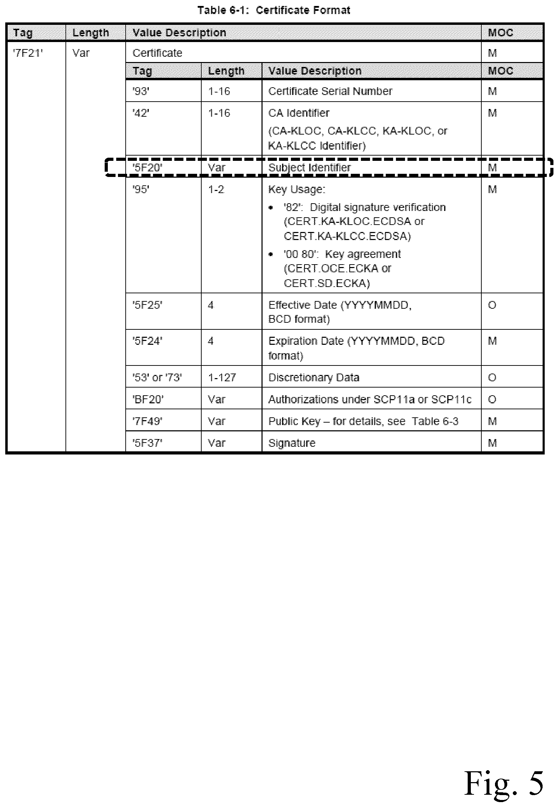

In embodiments mapped to [3], to calculate diversified SCP11c session keys it is proposed to use 'Include Host and Card Group ID in key derivation process' option in the MUTUAL AUTHENTICATION command. As defined in [3] GP amd F, the MUTUAL AUTHENTICATION command contains the following data. Relevant fields for the idea are highlighted in Figure 3 and Figure 5.

By utilizing the SCP11c parameter Card Group ID as part of the SCP11c key diversification data for SCP11c session key generation, the effect is achieved, that different SCP11c session keys are generated for processing entities belonging to different Card Groups.

For example, different vendors of processing entities (which may be "Cards" or processing entities of other form factor) may each provide a vendor specific batch of processing entities. In such a case, for each vendor specific batch, different vendor specific SCP11c session keys may be generated, due to the different vendor specific Card Group ID being incorporated in the session key derivation process as key diversification data.

Accordingly, the presented method provides a flexible solution for diversification of SCP11c session keys.

Since SCP11c is particularly suitable for offline scripts, the presented solution is particularly suitable for In-Factory environments, wherein the Off-card entity, OCE, is embodied as a production machine, which is located in said In-Factory environment, and which communicates with the Secure Element, SE, (with the SE as the processing entity) over a secure channel using the generated session keys.

The solution is further suitable for after production deployment, wherein a single script is distributed among multiple devices / Secure Elements sharing the same configuration, herein using the key diversification according to the presented invention or diversification of the script to the multiple devices / Secure Elements.

The generated session keys can further on be used for provisioning the Secure Element in a variety of use cases to prepare scripts to modify, install, delete applications, including applets, or configurations in a Secure Element, including eUICCs.

Further embodiments are set out in the depending claims, as follows.

In some embodiments, the Card Group ID may typically have the same value among sharing configurations for an entire Group of processing entities, for example for a batch of processing entities of a particular vendor, as described above.

In some embodiments, the SCP11c parameter Card Group ID is different for each individual processing entity, so as to achieve an individual unique set of session keys for each processing entity, (and not only a different set of session keys for each Group/batch), by making use of the individualized parameter Card Group ID as key diversification data, which are individual to a single processing entity.

In such embodiments, usage of different Card Group IDs for different processing entities (e.g. Secure Elements) enables and effects to generate a different session keys for each processing entity (e.g. SE) starting with an identical key configuration in multiple processing entities (e.g. SEs), e.g. for an entire batch / Group of processing entities.

In some embodiments, the Card Group ID is an identifier that is configured in a Certificate CERT.SD.ECKA of the processing entity (e.g. an SE). In detail, in such embodiments, the key diversification data comprise, as Card Group ID, a Subject Identifier (such as Tag 5F20) from a CERT.SD.ECKA certificate stored in the Security Domain, SD. According to some embodiments, for each Group or batch of several Groups or batches of processing entities, the Subject Identifier (such as Tag 5F20) is different for each Card Group or batch, and identical for all processing entities within Card Group or batch. The Certificate CERT.SD.ECKA of the processing entity may contain a different Subject Identifier (such as Tag 5F20) for each Card Group or batch, and identical Subject identifiers (such as Tag 5F20) within the Card Group or batch.

In some embodiments, the Card Group ID is an identifier that is configured in a Certificate CERT.SD.ECKA of the processing entity (e.g. an SE). In detail, in such embodiments, the key diversification data comprise, as Card Group ID, a Subject Identifier (such as Tag 5F20) from a CERT.SD.ECKA certificate stored in the Security Domain, SD. According to some embodiments, the Subject Identifier (such as Tag 5F20) is different for each individual processing entity. According to some embodiments, for each individual processing entity, the Certificate CERT.SD.ECKA of the processing entity may contain a different Subject Identifier (such as Tag 5F20).

In some preferred embodiments, following further key diversification data are included:
- Key Usage Qualifier (such as Tag 95),
- Key Type (such as Tag 80),
- Key Length (such as Tag 81).

The diversification option may also be activable (activatable, enablable) and de-activable (de-activatable, disablable) by the Off-Card entity, which shall communicate with the processing entity (e.g. Secure Element, SE) for activating (enabling) or de-activating (disabling), respectively.

Accordingly, according to a further aspect of the invention, the key diversification can be switched on or off, at choice.

The presented switching solution according to the further aspect has the following additional advantages:
The solution allows the capability to create scripts to target to all the processing entities (or devices hosting such processing entities) or scripts addressed to a single Group/batch, or even to a single processing entity (or device hosting such processing entity), by either enabling (activating) in the one case, or not enabling or disabling in the other case, the 'Include Host and Card ID in key derivation process':
The switching solution can be used to create tests scripts that only affects a unique Gorup/batch, or even a unique processing entity (or device), instead of all the processing entities (or device) sharing same configuration, with associate risk of massive deployment (for instance modifying specific data or keys).

The switching solution can be used to create unique scripts specifically for a single target processing entity (or device hosting said processing entity) in case it is required to configure diversify data, forcing that a different script has to be sent to each of the processing entities (devices hosting such a processing entity), whereas reusability across several processing entities / devices is not possible.

The further aspects add additional flexibility to the flexible solution for diversification of SCP11c session keys.

Further, an Off-Card entity and a processing entity are presented, configured such that, when operated, an inventive method is executed.

According to some embodiments, the processing entity is a Secure Element, SE.

According to some embodiments, the processing entity is a Subscriber Identity Module, SIM, of any suitable form factor, wherein the Security Domain, SD, is any of the following Security Domains:
- an Issuer Security Domain, ISD; or
- a Supplementary Security Domain, SSD.

According to some embodiments, the Subject Identifier (such as Tag 5F20) comprises, as key diversification data, one or several of:
- a random value;
- an eUICC identifier, EID;
- an ICCID;
- an IMSI or SUPI or SUCI or NAI;
- a deterministic value;
- any other value; and
- herein preferably at least one out of:
   --- an eUICC identifier, EID;
   --- an ICCID;
   --- an IMSI or SUPI or SUCI or NAI.

According to some embodiments, the key diversification data comprise a Subject Identifier from a CERT.SD.ECKA certificate stored in the Security Domain, SD, wherein:
- the Subject Identifier Tag '5F20' is used as key diversification data in that the SCP identifier, and parameter b3 is set to a value 1.

According to some embodiments, the key diversification data further comprise one or several authentication parameters contained in a MUTUAL AUTHENTICATE command sent by the Off-Card entity and received at the processing entity, the one or several authentication parameters comprising one or several of the following:
- a Tag '90' SCP Identifier and parameter b2b1=11, indicating SCP11c;
- a Tag '90' SCP Identifier and parameter b3=1, indicating Host and Card ID / Card Group ID are included in the key derivation process;
- a Tag '84' Length and value of the Host ID from MUTUAL AUTHENTICATION command;
- a Key Usage Qualifier parameter, particularly of length 1 byte;
- a Key Type parameter, particularly of length 1 byte;
- a Key Length parameter, particularly of length 1 byte;
- HostID-LV, in case of HostID-LV and Card Group ID-LV is indicated to be included in the key diversification data in Tag '90' SCP Identifier.

### Brief description of the drawings

Embodiments of the invention will now be described with reference to the accompanying drawings, throughout which like parts are referred to by like references, and in which represents:
- Fig. 1: Figures 4-1 and 4-4 from prior art document [3] GPC_2.3_F SCP11 v1.4;
- Fig. 2: Tables 7-15 and 7-2 from prior art document [3] GPC_2.3_F SCP11 v1.4;
- Fig. 3: embodiments of the invention, based on Fig. 2;
- Fig. 4: Table 6-1 from [3] GPC_2.3_F SCP11 v1.4;
- Fig. 5: embodiments of the invention, based on Fig. 4.

### Detailed description of the invention

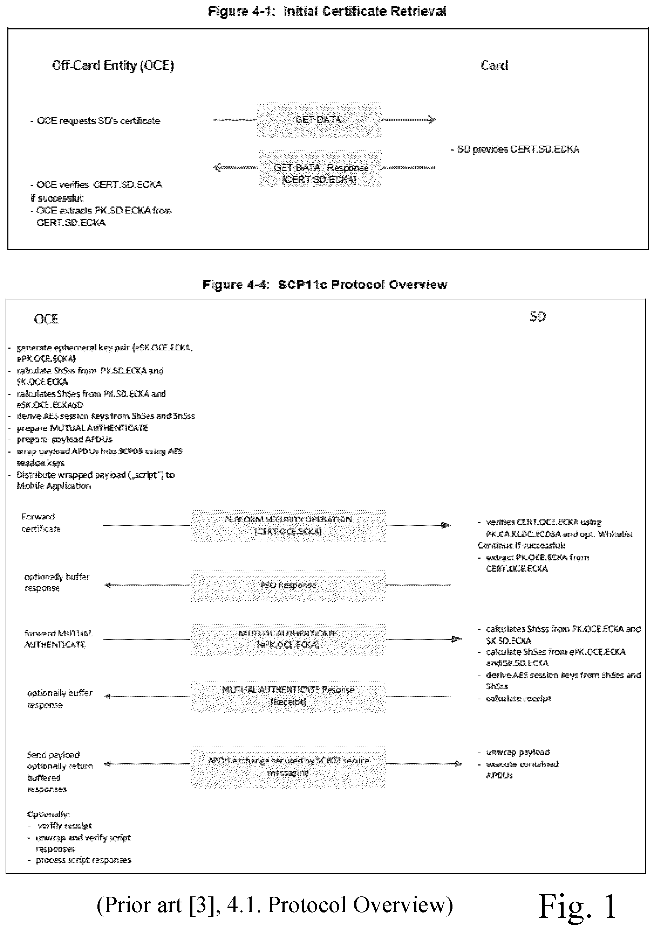

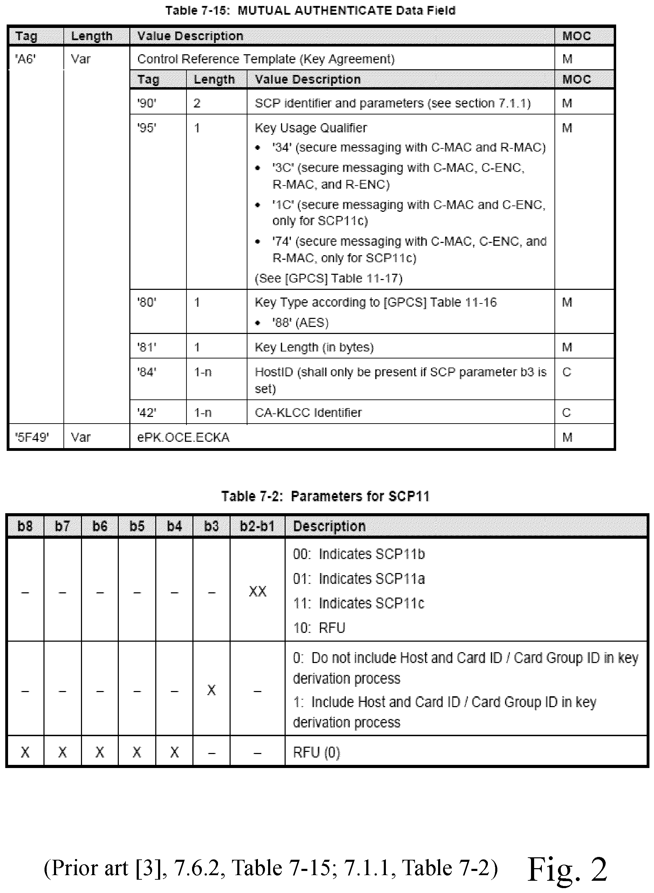

Fig. 1 and Fig. 2 show a starting point for embodiments of the invention.

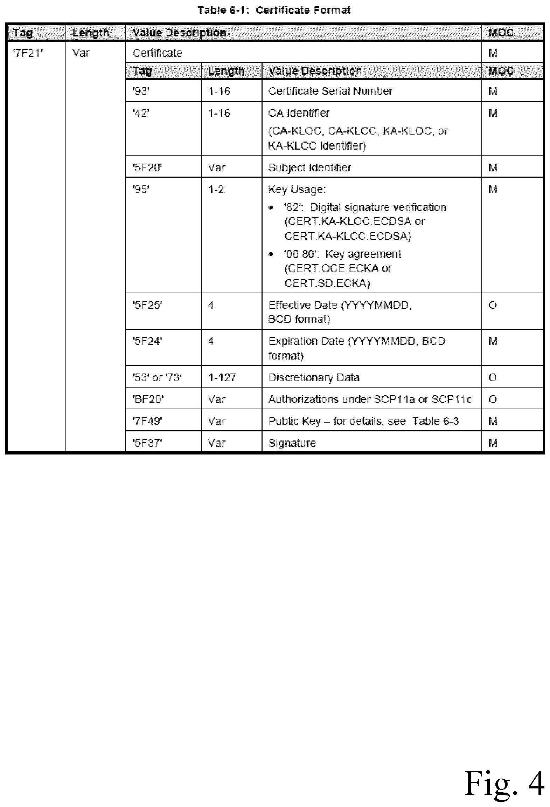

Fig. 1 shows Figures 4-1 and 4-4 from prior art document [3] GPC_2.3_F SCP11 v1.4, wherein an overview of the procedure of establishing an SCP11c Secure Channel is depicted.

According to Figure 4-1, if required, the Off-Card entity OCE retrieves from the card SD an SD certificate CERT.SD.ECKA in which the card's public key PK.SD.ECKA is contained. According to Figure 4-4, the OCE performs steps:
- generate an ephemeral key pair comprising an OCE secret key eSK.OCE.ECKA and an OCE public key ePK.OCE.ECKA;
- calculate a static-based shared secret ShSss from the card's static public key PK.SD.ECKA and the OCE static secret key SK.OCE.ECKA;
- calculate an ephemeral-based shared secret ShSes from the card's static public key PK.SD.ECKA and the OCE ephemeral secret key eSK.OCE.ECKA;
- derive AES session keys from ShSes and ShSss;
- prepare MUTUAL AUTHENTICATE;
- prepare payload APDUs;
- wrap payload APDUs into SCP03 using AES session keys;
- distribute wrapped payload ("script") to Mobile Application.

As a next step, the OCE performs a security operation and forwards the certificate CERT.OCE.ECKA to the SD. The SD verifies the certificate CERT.OCE.ECKA using the certificate authority CA's public key PK.CA.KLOC.ECDSA that typically is personalized during production phase. The SD extracts the public key PK.OCE.ECKA from the OCE's certificate CERT.OCE.ECKA. The SD sends a PSO response to the OCE. The OCE may buffer the response at its end.

As a next step, the OCE forwards to the SD a MUTUAL AUTHENTICATE command including the OCE's ephemeral public key ePK.OCE.ECKA.

The SD calculates ShSss from the OCE's static public key PK.OCE.ECKA and its own static secret key SK.SD.ECKA. The SD calculates ShSes with the OCE's ephemeral public key ePK.OCE.ECKA and its own static secret key SK.SD.ECKA. The SD derives AES session keys from ShSes and ShSss. The SD calculates a receipt and sends back to the OCE a MUTUAL AUTHENTICATE response including the calculated receipt. The OCE may buffer the receipt.

At this point the SCP11c channel is established, and the OCE and the SD may exchange APDUs secured by SCP03 secure messaging.

The OCE may further verify the receipt, unwrap and verify script responses and process script responses.

As is obvious from Fig. 1, AES session keys calculated during the SCP11c authentication as outlined above using the same OCE keys and static key in the SD will be the same.

Fig. 2 shows in Table 7-15 from [3] GPC_2.3_F_SCP11_v1.4, data fields of the MUTUAL AUTHENTICATE command. One data field is, at Tag 90, and with length 2 bytes, the data field SCP identifiers. Another data field is, at Tag 84, and with length 1-n bytes, the data field Host ID, which is only present if the SCP parameter b3 is set to value 1.

Fig. 2 shows further, in Table 7-2 from [3] GPC_2.3_F SCP11 v1.4, that if parameter b2b1 is set to value 11, the protocol version is SCP11c, and if parameter b3 is set to 1, the Host and Card ID / Card Group ID (as applicable) are included in the key derivation process.

Fig. 3 shows parameters used as key diversification data, according to embodiments of the present invention.

According to some embodiments one or several SCP identifiers and parameters, from Tag 90, are used as key diversification data in the SCP11c key derivation.

According to some embodiments Host and Card ID / Card Group ID (as applicable), from Tag 84, are used as key diversification data in the SCP11c key derivation. In such embodiments, the Card Group ID identifies a group of Secure Elements that share the same configuration (i.e., same static SD key, Subject Identifier Tag 5F20, ...) and therefore it is possible to generate the same session keys for all the SE sharing the same Card group ID. The Card Group ID is defined in [3] as Tag '5F20' Subject Identifier of CERT.SD.ECKA. The method proposed in this embodiment proposes to diversify individually Tag '5F20' Subject Identifier of CERT.SD.ECKA per each SE instead of configuring per Card group ID.

In order to enable usage of the SCP11c version, parameter b2b1 is set to 11.

In order to enable usage of Host and Card ID / Card Group ID (as applicable), from Tag 84, are used as key diversification data in the SCP11c key derivation, the SCP11 parameter b3 is set to 1, indicating that Host and Card ID / Card Group ID (as applicable), from Tag 84, are present.

Fig. 3, table 7-2, also shows, by switching parameter b3 from b3=0 to b3=1, key diversification data can be switched on, effecting that calculation of four or more SCP11c session keys generates different SCP11c session keys. By switching parameter b3 from b3=1 to b3=0, key diversification data can be switched off, effecting that calculation of four or more SCP11c session keys generates identical SCP11c session keys. The number of the generated session keys may be fixed according to [3] Table 7-16, wherein there are at least 4 session keys: receipt key, S-ENC, S-MAC and S-RMAC. Optionally (or conditionally) a 5th key can be generated, S-DEK.

The switching of a configuration of key diversification between on and off provides following additional advantages.

Do not include Host and Card ID / Card Group ID in key derivation process: Card group ID will not be used to calculate the session keys.

Calculated session keys and any generated script can be used across all the SD sharing the same keys.

Include Host and Card ID / Card Group ID in key derivation process: Card group ID will be used to calculate the session keys.

Calculated session keys and any generated script will be unique per group, or even unique per SD and will not be possible to run an script to a non-target group, or non-target SD, respectively.

This method brings much more flexibility of SCP11c as compared to the original definition as it will allow the creation of scripts targeting a particular device (i.e., for testing purposes where it is not wanted that a script can be executed to all products sharing same keys, ...) or scripts that can be used to any, depending on circumstances.

Fig. 4 shows Table 6-1 from [3], including a Subject Identifier, Tag 5F20, from the Card Group ID.

Fig. 5 shows embodiments of the invention, based on Fig. 4, Table 6-1 from [3], according to which wherein the key diversification data comprise a Subject Identifier, Tag 5F20, from the Card Group ID.

### Cited documents

[1] [SGP.22] GSMA SGP.22 RSP Technical Specification Version 3.0, 19th October 2022
[2] [SGP.32] GSMA SGP.32 eSIM loT Technical Specification Version 1.0.1, 04 July 2023
[3] GPC_2.3_F SCP11 v1.4, GlobalPlatform Technology Secure Channel Protocol '11' Card Specification v2.3 - Amendment F Version 1.4, March 2024

## Claims

**1.** A method in an Off-Card entity, OCE, for calculating, in said Off-Card entity, OCE, related to an SCP11c Secure Channel between said Off-Card Entity, OCE, and a Security Domain, SD, included in a processing entity, SCP11c session keys, the calculating made based on:
a) an SD static public key PK.SD.ECKA;
b) an OCE static secret key SK.OCE.ECKA;
c) an OCE ephemeral secret key eSK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

**2.** A method in a processing entity, for calculating, in a Security Domain, SD, included in said processing entity, related to an SCP11c Secure Channel between an Off-Card Entity, OCE, and a Security Domain, SD, SCP11c session keys, the calculating made based on:
a) an SD static secret key SK.SD.ECKA;
b) an OCE static public key PK.OCE.ECKA;
c) an OCE ephemeral public key ePK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

**3.** The method according to claim 1 or 2, wherein the SCP11c parameter Card Group ID is different for each processing entity.

**4.** The method according to any of claims 1 to 3, wherein the key diversification data comprise, as Card Group ID, a Subject Identifier (Tag 5F20) from a CERT.SD.ECKA certificate stored in the Security Domain, SD, wherein the Subject Identifier (Tag 5F20) is different for each processing entity.

**4.** The method according to any of claims 1 to 3, wherein the key diversification data further comprise the following SCP11c parameters:
- Key Usage Qualifier (Tag 95),
- Key Type (Tag 80),
- Key Length (Tag 81).

**5.** The method according to any of claims 1 to 4, wherein the processing entity is a Secure Element, SE.

**6.** The method according to any of claims 1 to 5, wherein the processing entity is a Subscriber Identity Module, SIM, and wherein the Security Domain, SD, is any of the following Security Domains:
- an Issuer Security Domain, ISD; or
- a Supplementary Security Domain, SSD.

**7.** The method according to claim 6, wherein the Subject Identifier (Tag 5F20) comprises, as key diversification data, one or several of:
- a random value;
- an eUICC identifier, EID;
- an ICCID;
- an IMSI or SUPI or SUCI or NAI;
- a deterministic value;
- any other value; and
- herein preferably at least one out of:
--- an eUICC identifier, EID;
--- an ICCID;
--- an IMSI or SUPI or SUCI or NAI.

**8.** The method according to any of claims 1 to 7, wherein the key diversification data comprise a Subject Identifier (Tag '5F20') from a CERT.SD.ECKA certificate stored in the Security Domain, SD, wherein:
- the Subject Identifier Tag '5F20' is used as key diversification data in that the SCP identifier and parameter b3 is set to a value 1.

**9.** The method according to any of claims 1 to 8, wherein the key diversification data further comprise one or several authentication parameters contained in a MUTUAL AUTHENTICATE command sent by the Off-Card entity and received at the processing entity, the one or several authentication parameters comprising one or several of the following:
- a Tag '90' SCP Identifier and parameter b2b1=11, indicating SCP11c;
- a Tag '90' SCP Identifier and parameter b3=1, indicating Host and Card ID / Card Group ID are included in the key derivation process;
- a Tag '84' Length and value of the Host ID from MUTUAL AUTHENTICATION command;
- a Key Usage Qualifier parameter, particularly of length 1 byte;
- a Key Type parameter, particularly of length 1 byte;
- a Key Length parameter, particularly of length 1 byte;
- HostID-LV, in case of HostID-LV and Card Group ID-LV is indicated to be included in the key diversification data in Tag '90' SCP Identifier.

**10.** An Off-Card entity, OCE, configured or calculating, in said Off-Card entity, OCE, related to an SCP11c Secure Channel between said Off-Card Entity, OCE, and a Security Domain, SD, included in a processing entity, SCP11c session keys, the calculating made based on:
a) an SD static public key PK.SD.ECKA;
b) an OCE static secret key SK.OCE.ECKA;
c) an OCE ephemeral secret key eSK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

**11.** A processing entity, configured for calculating, in a Security Domain, SD, included in said processing entity, related to an SCP11c Secure Channel between an Off-Card Entity, OCE, and a Security Domain, SD, SCP11c session keys, the calculating made based on:
a) an SD static secret key SK.SD.ECKA;
b) an OCE static public key PK.OCE.ECKA;
c) an OCE ephemeral public key ePK.OCE.ECKA; and
d) key diversification data;
the key diversification data being used to effect that more than one SCP11c session keys calculated with the same keys a), b) and c) are different from each other;
**characterized in that**
the processing entity is configured such that SCP11c session keys are calculated for different Card Group IDs, **in that** the key diversification data comprise the following SCP11 parameters:
- HostID (Tag 84); and
- Card Group ID (Tag 5F20).

**12.** The Off-Card entity according to claim 10, or processing entity according to claim 11, further configured for a method according to any of claims 3 to 9.

**13.** A method for switching a configuration of a processing entity according to claim 11 or 12, or of an Off-Card entity according to claim 10 or 12, **characterized in that** the switching of the configuration is effected **in that**:
- either the key diversification data are set into a status to be used in order to effect that more than one calculated SCP11c session keys are different from each other; or
- the key diversification data are set into a status not to be used to effect that more than one calculated SCP11c session keys are identical.

**14.** The method according to claim 13, wherein the key diversification data comprise a Subject Identifier (Tag '5F20') from a CERT.SD.ECKA certificate stored in the Security Domain, SD, wherein:
- the key diversification data are set into a status to be used in that: the SCP identifier and parameter b3 is set to a value 1, to effect that the Subject Identifier Tag '5F20' and HostID are used as key diversification data; or
- the key diversification data are set into a status not to be used in that: the SCP identifier and parameter b3 is set to a value 0, to effect that the Subject Identifier Tag '5F20' and HostID are not used as key diversification data.

**15.** The method according to any of claims 1 to 9 or 12 to 13, wherein a number of four or five session keys is calculated.

## Amended claims

### Amended claims in accordance with Rule 137(2) EPC.

1. A method in an Off-Card entity, OCE, for calculating, in said Off-Card entity, OCE, related to an SCP11c Secure Channel between said Off-Card Entity, OCE, and a Security Domain, SD, included in a processing entity, SCP11c session keys, the calculating made based on:
a) an SD static public key PK.SD.ECKA;
b) an OCE static secret key SK.OCE.ECKA;
c) an OCE ephemeral secret key eSK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

2. A method in a processing entity, for calculating, in a Security Domain, SD, included in said processing entity, related to an SCP11c Secure Channel between an Off-Card Entity, OCE, and the Security Domain, SD, SCP11c session keys, the calculating made based on:
a) an SD static secret key SK.SD.ECKA;
b) an OCE static public key PK.OCE.ECKA;
c) an OCE ephemeral public key ePK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

3. The method according to claim 1 or 2, wherein the SCP11c parameter Card Group ID is different for each processing entity.

4. The method according to any of claims 1 to 3, wherein the key diversification data comprise, as Card Group ID, a Subject Identifier (Tag 5F20) from a CERT.SD.ECKA certificate stored in the Security Domain, SD, wherein the Subject Identifier (Tag 5F20) is different for each processing entity.

5. The method according to any of claims 1 to 4, wherein the key diversification data further comprise the following SCP11c parameters:
- Key Usage Qualifier (Tag 95),
- Key Type (Tag 80),
- Key Length (Tag 81).

6. The method according to any of claims 1 to 4, wherein the processing entity is any of:
- a Secure Element, SE; - a Subscriber Identity Module, SIM, and wherein the Security Domain, SD, is any of the following Security Domains:
- an Issuer Security Domain, ISD; or
- a Supplementary Security Domain, SSD.

7. The method according to claim 6, wherein the Subject Identifier (Tag 5F20) comprises, as key diversification data, one or several of:
- a random value;
- an eUICC identifier, EID;
- an ICCID;
- an IMSI or SUPI or SUCI or NAI;
- a deterministic value;
- any other value; and
- herein preferably at least one out of:
--- an eUICC identifier, EID;
--- an ICCID;
--- an IMSI or SUPI or SUCI or NAI.

8. The method according to any of claims 1 to 7, wherein the key diversification data comprise a Subject Identifier (Tag '5F20') from a CERT.SD.ECKA certificate stored in the Security Domain, SD, wherein:
- the Subject Identifier Tag '5F20' is used as key diversification data in that the SCP identifier and parameter b3 is set to a value 1.

9. The method according to any of claims 1 to 8, wherein the key diversification data further comprise one or several authentication parameters contained in a MUTUAL AUTHENTICATE command sent by the Off-Card entity and received at the processing entity, the one or several authentication parameters comprising one or several of the following:
- a Tag '90' SCP Identifier and parameter b2b1=11, indicating SCP11c;
- a Tag '90' SCP Identifier and parameter b3=1, indicating Host and Card ID / Card Group ID are included in the key derivation process;
- a Tag '84' Length and value of the Host ID from MUTUAL AUTHENTICATION command;
- a Key Usage Qualifier parameter, particularly of length 1 byte;
- a Key Type parameter, particularly of length 1 byte;
- a Key Length parameter, particularly of length 1 byte;
- HostID-LV, in case of HostID-LV and Card Group ID-LV is indicated to be included in the key diversification data in Tag '90' SCP Identifier.

10. An Off-Card entity, OCE, configured or calculating, in said Off-Card entity, OCE, related to an SCP11c Secure Channel between said Off-Card Entity, OCE, and a Security Domain, SD, included in a processing entity, SCP11c session keys, the calculating made based on:
a) an SD static public key PK.SD.ECKA;
b) an OCE static secret key SK.OCE.ECKA;
c) an OCE ephemeral secret key eSK.OCE.ECKA; and
d) key diversification data;
the key diversification data being used to effect that more than one SCP11c session keys calculated with the same keys a), b) and c) are different from each other;
**characterized in that**
the SCP11c session keys are calculated for different Card Group IDs, **in that** the key diversification data comprise the following SCP11c parameters:
- HostID (Tag 84); and
- Card Group ID (Tag 5F20).

11. A processing entity, configured for calculating, in a Security Domain, SD, included in said processing entity, related to an SCP11c Secure Channel between an Off-Card Entity, OCE, and the Security Domain, SD, SCP11c session keys, the calculating made based on:
a) an SD static secret key SK.SD.ECKA;
b) an OCE static public key PK.OCE.ECKA;
c) an OCE ephemeral public key ePK.OCE.ECKA; and
d) key diversification data;
the key diversification data being used to effect that more than one SCP11c session keys calculated with the same keys a), b) and c) are different from each other;
**characterized in that**
the processing entity is configured such that SCP11c session keys are calculated for different Card Group IDs, **in that** the key diversification data comprise the following SCP11 parameters:
- HostID (Tag 84); and
- Card Group ID (Tag 5F20).

12. The Off-Card entity according to claim 10, or processing entity according to claim 11, further configured for a method according to any of claims 3 to 9.

13. A method for switching a configuration of a processing entity according to claim 11 or 12, or of an Off-Card entity according to claim 10 or 12, **characterized in that** the switching of the configuration is effected **in that**:
- either the key diversification data are set into a status to be used in order to effect that more than one calculated SCP11c session keys are different from each other; or
- the key diversification data are set into a status not to be used to effect that more than one calculated SCP11c session keys are identical.

14. The method according to claim 13, wherein the key diversification data comprise a Subject Identifier (Tag 'SF20') from a CERT.SD.ECKA certificate stored in the Security Domain, SD, wherein:
- the key diversification data are set into a status to be used in that: the SCP identifier and parameter b3 is set to a value 1, to effect that the Subject Identifier Tag '5F20' and HostID are used as key diversification data; or
- the key diversification data are set into a status not to be used in that: the SCP identifier and parameter b3 is set to a value 0, to effect that the Subject Identifier Tag '5F20' and HostID are not used as key diversification data.

15. The method according to any of claims 1 to 9 or 12 to 13, wherein a number of four or five session keys is calculated.
